# DEMANDE DE BREVET EUROPEEN

(11) **EP 1 522 220 A1**
(43) Date de publication de la demande: **13.04.2005**
(21) Numéro de dépôt: 04292369.8
(22) Date de dépôt: 06.10.2004
(51) Int. Cl.: A21C 1/06, B01F 7/04

(54) **Pétrin manuel**

(30) Priorité: 07.10.2003 FR 0311731
(71) Demandeur: Heller, 61160 Trun (FR)
(72) Inventeur: D'Estais, Mathias, 14610 Cairon (FR)
(74) Mandataire: Breesé, Pierre

(57) **Abrégé**

La présente invention se rapporte à un pétrin manuel (1), destiné en particulier aux enfants, comportant une enceinte (2) disposant d'une ouverture (3) pour l'introduction d'ingrédients, par exemple de l'eau et/ou de la farine, caractérisé en ce qu'il comprend une manivelle (4) munie d'au moins une pale souple (5), ladite pale (5) étant disposée dans l'enceinte (2) et étant entraînée en rotation par une poignée (6) de la manivelle (4), extérieure à la susdite enceinte (2), la pale (5) couvrant sensiblement la totalité du volume intérieur de l'enceinte (2) lors de sa rotation.

## Description

La présente invention se rapporte au domaine des pétrins et autres dispositifs destinés à réaliser une pâte ou un mélange alimentaire. La présente invention se rapporte plus particulièrement à un pétrin manuel pour enfants afin de leur permettre de réaliser des pâtes alimentaires mais également des pâtes déformables, ou moulable, pour que les enfants puissent jouer avec.

L'art antérieur connaît déjà des recettes pour la réalisation de pâtes nécessitant des manipulations manuelles. Ainsi, les ingrédients secs sont mélangés entre eux puis on ajoute les liquides progressivement. L'obtention d'une belle pâte est assez difficile car il faut écraser très longtemps les ingrédients.

L'un des désagrément est que les fragments de pâte ou d'ingrédients se collent entre les doigts. Un autre désagrément est que de nombreux fragments de pâte en cours de constitution, ou éléments d'ingrédients, tombent et salissent l'environnement de travail. Ces désagréments sont tels que la création de la pâte est rarement laissée aux enfants. Les adultes doivent alors préparer la pâte pour que les enfants puissent ensuite l'exploiter comme pâte à modeler, par exemple de la pâte à sel, des enduits ou former un biscuit ou tout autre gâteau s'il s'agit de pâte comestible.

Les techniques actuelles de développement de pétrin ou de dispositifs pour réaliser une pâte ont toujours été des appareils industriels ou domestiques destinés à améliorer la production de pâte, et éventuellement sa qualité. En particulier, les pétrins de professionnels ou de particuliers utilisent toujours des pales rigides et la rotation automatique de ces pales est souvent effectuée à très haute vitesse, soit entre 1000 et 3000 tours/minute pour les pétrins de particuliers et de l'ordre de 100 tours/minute avec des volumes très important pour les pétrins professionnels, ce qui est incompatible avec une utilisation pour des enfants, en particulier en raison de la dangerosité de ces appareils.

Un exemple de ce type de dispositif est donné par la demande de brevet WO 9508269. L'objet de cette demande de brevet concerne une machine à pétrir la pâte en continu constituée d'un carter doté d'une admission pour la pâte destinée à être pétrie et tout ingrédient supplémentaire et d'une sortie pour la pâte pétrie, d'un corps de pétrissage tourillonné dans ledit carter sur un axe pratiquement horizontal. Ledit corps de pétrissage présente plusieurs bras droits axialement allongés qui s'étendent pratiquement radialement depuis l'axe, comportent des ouvertures de passage, et sont disposés selon un espacement angulaire les uns par rapport aux autres. Afin d'assurer un transport optimal vers la sortie de la machine outre un pétrissage optimal, même lorsque la matière pâteuse présente de faibles caractéristiques d'écoulement dans sa phase initiale, un élément à lame au moins adjacent au côté admission exerce, lorsqu'il est en rotation le long du corps de pétrissage, une force descendante sur la matière pâteuse.

La présente invention entend remédier aux lacunes des dispositifs de l'art antérieur en proposant un pétrin permettant à un enfant d'obtenir simplement sa pâte, de manière autonome, propre, facile et ludique.

La présente invention concerne un pétrin manuel, destiné en particulier aux enfants, comportant une enceinte destinée à recevoir des ingrédients, par exemple de l'eau et/ou de la farine, soit directement mis en place dans l'enceinte soit introduit par une ouverture, caractérisé en ce qu'il comprend une manivelle munie d'au moins une pale souple, ladite pale étant disposée dans l'enceinte et étant entraînée en rotation par une poignée de la manivelle, extérieure à la susdite enceinte, la pale couvrant sensiblement la totalité du volume intérieur de l'enceinte lors de sa rotation.

Avantageusement, la susdite enceinte sera montée sur un moyen de support.

Selon un mode d'exécution de l'invention, le moyen de support consistera en quatre pieds s'étendant sensiblement obliquement à partir dudit moyen ou de ladite enceinte.

Avantageusement, l'ensemble des éléments du dispositif, à savoir l'enceinte, son ouverture, la manivelle et le moyen de support, seront démontables ; ladite enceinte étant démontable en plusieurs portions, par exemple deux parties hémisphériques.

Avantageusement, l'enceinte présentera une forme sphérique, ovoïdale, en forme d'olive ou de sphère aplatie.

Selon un aspect avantageux de l'invention, l'enceinte pourra comprendre au moins une protubérance intérieure, c'est-à-dire s'étendant vers l'intérieur de ladite enceinte.

Avantageusement, le moyen de support permettra de disposer l'axe de rotation de la pale à la verticale, à l'horizontale, sensiblement incliné à 15° par rapport à l'horizontale ou sensiblement incliné à 45° par rapport à l'horizontale.

Selon les diverses variantes de l'invention, le pétrin manuel pourra comprendre deux pales, couvrant ensemble ou séparément sensiblement la totalité du volume intérieur de l'enceinte lors de leur rotation, ou bien trois ou quatre pales, couvrant également ensemble ou séparément sensiblement la totalité du volume intérieur de l'enceinte lors de leur rotation.

Selon une autre possibilité, le pétrin manuel pourra comprendre une, deux, trois ou quatre pale(s) hélicoïdale(s).
De préférence, l'ouverture de l'enceinte comprendra un moyen d'obturation.

Avantageusement, le pétrin manuel comprendra un dispositif d'injection amovible. Le dispositif d'injection sera idéalement situé au-dessus de l'enceinte.

Selon une possibilité, le dispositif d'injection disposera d'une soupape poussée par un ressort, pour injecter un liquide ou un semi-liquide dans l'enceinte. Par ailleurs, le dispositif d'injection comprendra une pige apte à forcer la soupape en ouverture pour larguer du liquide ou semi-liquide dans l'enceinte.
Selon une autre possibilité, le dispositif d'injection pourra consister en une membrane élastomère fendue, la pige venant déformer la membrane élastomère pour autoriser son ouverture.

Avantageusement, l'enceinte sera transparente.

Selon une possibilité, le pétrin selon l'invention comprendra un dispositif chauffant ou refroidissant entourant au moins partiellement la susdite enceinte. Ledit dispositif pourra consister en une double paroi dans laquelle un fluide chaud ou froid est transporté ou simplement repose.

Selon une autre possibilité, ledit dispositif consiste en une résistance ou une ampoule électrique.

Avantageusement, le moyen de support pourra comprendre un socle disposant notamment d'une zone de réception sensiblement creuse pour recevoir la pâte finie ou tout autres éléments.

Avantageusement, le socle pourra comprendre une pluralité d'élément de fixation, par exemple de simples logements, pour fixer différents accessoires par exemple pour imprimer la pâte ou pour la mettre en forme.

On comprendra mieux l'invention à l'aide de la description, faite ci-après à titre purement explicatif, d'un mode de réalisation de l'invention, en référence aux figures annexées :
- la figure 1 illustre une vue en perspective d'un mode de réalisation du pétrin manuel selon l'invention ;
- la figure 2 illustre une vue en perspective éclatée de l'ensemble des éléments constitutifs d'un pétrin manuel selon l'invention ;
- la figure 3 illustre une vue en perspective d'une variante de réalisation d'un pétrin manuel selon l'invention dans laquelle l'enceinte repose sur un piétement formé de quatre pieds s'étendant obliquement ;
- la figure 4 illustre une vue en coupe d'une enceinte particulière d'un pétrin selon l'invention dans laquelle une protubérance dirigée vers le centre de ladite enceinte est présente ; et
- les figures 5a à 5c illustrent des vues de pales équipant le pétrin manuel selon l'invention.

Comme cela est visible sur les figures annexées, le pétrin manuel 1 selon l'invention comprend une enceinte 2 fermée disposant d'un volume plus ou moins sphérique. On place les ingrédients directement dans l'enceinte dans le cas où l'enceinte est réalisée en plusieurs parties, ou bien on fait tomber les ingrédients dans l'enceinte 2 par son ouverture supérieure 3.

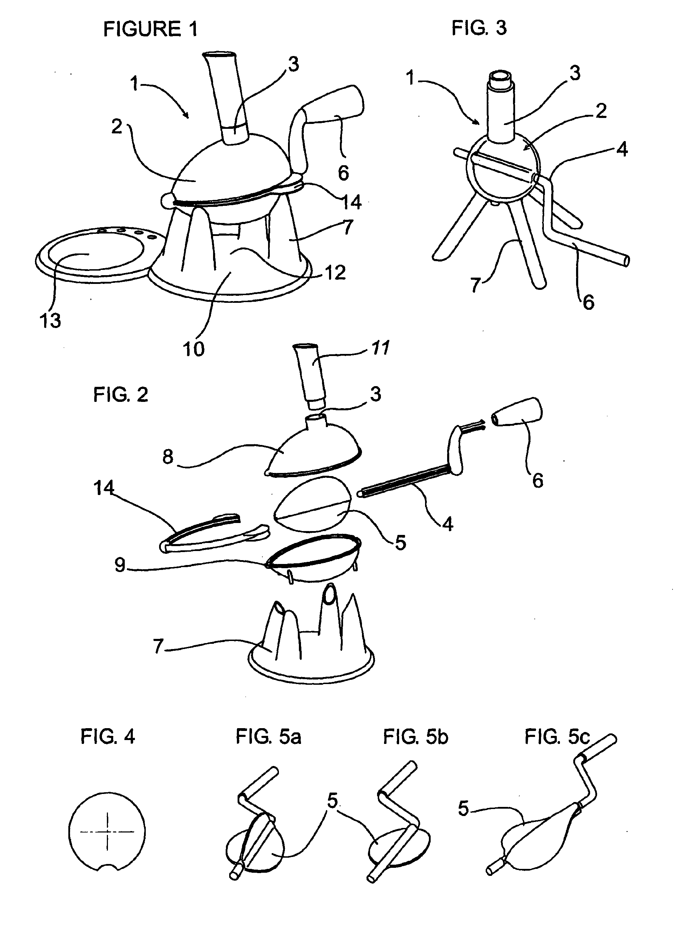

Le pétrin manuel 1 de l'invention comprend une pluralité d'éléments indépendants montables et fixables les uns aux autres, à savoir une enceinte fermée 2 disposant d'une ouverture 3, une manivelle 4 comportant au moins une pale 5 et une poignée 6, un piétement ou support 7 sur lequel repose l'enceinte 2. On pourra prévoir, comme cela est visible sur la figure 3 que l'ouverture de l'enceinte est munie d'un long tube présentant un diamètre suffisant pour l'introduction d'ingrédients, solide ou liquide, avec éventuellement un élément de renfort entourant ce tube. Dans un mode de réalisation de l'invention, tous les éléments composant le pétrin manuel 1 sont en plastique. Selon une possibilité offerte par l'invention, seul le piétement 7, en l'occurrence les quatre pieds s'étendant obliquement et sur lesquels repose l'enceinte 2, seront en métal.

L'enceinte 2 pourra présenter différentes formes et pourra également être constituée de plusieurs éléments aptes à se fixer les uns aux autres. Dans l'exemple choisi pour illustrer l'invention, l'enceinte 2 se compose de deux parties 8, 9 égales amovibles et fixables l'une à l'autre, par exemple par simple encliquetage de protubérances présentes sur les bords de l'une de deux parties 8 ou 9 dans des logements ou trous présents en coïncidence sur les bords de l'autre partie 8 ou 9. L'enceinte 2 est transparente, en matière plastique conventionnelle.

La manivelle 4 de l'invention consiste en deux tubes parallèles, l'un idéalement plus grand que l'autre, reliés entre eux par une portion sensiblement perpendiculaire aux dits tubes parallèles. Le tube de plus petite longueur comprend une poignée 6 ou simplement une forme plus ergonomique adaptée à la préhension d'une main d'enfant. Le tube de plus grande longueur comprend ou est muni d'au moins une pale souple 5, réalisée en matière plastique tels qu'un élastomère, fixée à ladite section. Cette pale 5 est située de manière à s'étendre sensiblement au milieu de cette section, l'extrémité de cette section étant libre de sorte que lorsque la manivelle 4 est introduite et fixée dans l'enceinte 2, cette extrémité dépasse de l'enceinte 2 pour assurer le phénomène de rotation de la pale 5 dans l'enceinte grâce à la poignée 6. Le pétrin 1 de l'invention peut comporter de une à quatre pale(s) 5 et cette pale 5 peut s'étendre selon un plan ou bien présenter une forme plus complexe telles que par exemple une forme hélicoïdale comme représentée sur la figure 5c. la forme préférée de l'enceinte 2 sera une forme ovoïdale mais il peut également être prévu que sa forme soit sphérique, en forme d'olive, ou de sphère aplatie. Lorsque l'enceinte 2 est réalisée en une pluralité de parties, ce mode de réalisation présente l'avantage de faciliter l'incorporation d'ingrédients par ouverture directe des parties constituant l'enceinte 2.

La pale souple 5, lors de sa rotation, lèche toue la surface intérieure de l'enceinte 2. Lorsque de la pâte puis un liquide, ou semi-liquide, est introduit dans l'enceinte 2, on obtient à la fin de l'opération de rotation de la ou des pale(s) 5 une pâte en forme de fuseau qui progresse en roulant sur la surface de l'enceinte 2, ce qui permet que la pâte récupère toutes les impuretés et les restes d'ingrédients au fur et à mesure de sorte que l'opération de pétrissage achevée, l'intérieur de l'enceinte 2 est propre.

Selon une possibilité offerte par l'invention, un ou deux rétrécissements du volume pourront êtres prévus dans l'enceinte 2, c'est-à-dire s'étendant vers le centre de l'enceinte 2, de manière à créer une torsion forcée de la (ou des) pale(s), et éventuellement un claquement de cette (ou de ces) dernière(s) lors de sa (ou de leurs) rotation(s).

Par ailleurs, l'axe de rotation de la (ou des) pale(s) 5 pourra être modifié de l'horizontale à une inclinaison de 45° grâce au piétement, reposant ou non sur un socle 10, par exemple en proposant que certains pieds soient plus petits que les autres. On pourra également prévoir que l'enceinte 2 soit placée verticale et dans ce cas, l'ouverture pourra être obturée de manière à éviter un épanchement des ingrédients se trouvant à l'intérieur. Dans un mode de réalisation, l'extrémité de la grande longueur de la manivelle 4 pourra simplement être introduite dans un logement servant de prise et l'utilisateur n'aura plus qu'à actionner la manivelle 4 et faire tourner la (ou les) pale(s) 5 pour ensuite récupérer la pâte formée.

Chacune des pales présentera une section apte à lui permettre de couvrir une surface plus ou moins équivalente à une demi-section de l'enceinte 2. Néanmoins, on pourra prévoir que lorsque le pétrin comprend plusieurs pales 5, les différentes pales 5 présenteront des surfaces différentes, par exemple dans le cas de deux pales, l'une des deux pales présenterait une surface relativement petite, inférieure à une demi-section de l'enceinte, tandis que l'autre pale présenterait une surface toujours sensiblement équivalente à une demi-section de l'enceinte 2. On pourra également envisager que chacune des pales 5 couvre une surface différente de la demi-section de l'enceinte 2 mais dans ce cas, les pales 5 formeront ensemble toujours une surface au moins équivalente à celle de la demi-section de l'enceinte 2.

L'injection d'eau, de liquide ou semi-liquide, est effectuée classiquement après rotation d'une dizaine de tours de pale(s) 5 à sec afin de bien mélanger les poudres et autres ingrédients secs ensemble. L'injection peut se faire simplement en ouvrant le moyen d'obturation, tels qu'un bouchon, de l'ouverture, de l'enceinte 2 et en versant la dose de liquide ou semi-liquide souhaité.

De préférence, le pétrin 1 selon l'invention comprendra une dose amovible, insérée sur un fourreau au-dessus de l'enceinte, l'injection ou le largage de liquide ou semi-liquide ayant lieu uniquement lorsqu'on appuie sur la dose amovible. L'injection est obtenue par exemple en utilisant une dosette dont le fond est constitué d'une soupape poussée vers le bas par un ressort. Une pige est prévue dans l'axe du fourreau recevant la dosette, de telle sorte que lorsqu'on appuie sur la dosette, la pige force la soupape en ouverture et largue les liquides ou semi-liquides. Dans une variante, l'ensemble « soupape-ressort » peut être remplacé par une simple membrane élastomère fendue.

Certaines pâtes peuvent demander un changement de température, par exemple des pâtes à modeler doivent être confectionnées à chaud, et des glaces ou des sorbets doivent être confectionnés à froid. Pour cela, le pétrin manuel selon l'invention comprendra éventuellement un dispositif de chauffage et/ou de refroidissement, non représenté sur les figures annexées.

Pour cela, on entoure l'enceinte 2 par le dispositif chauffant ou refroidissant, transmettant la chaleur ou le froid à travers la paroi de l'enceinte, qui pourra être spécialement choisie pour permettre de tels échanges.

L'apport de chaleur peut se faire par de l'eau chaude versée ou coulant en continu dans une double paroi. Elle peut se faire par la présence d'une résistance, ou bien encore par une simple ampoule électrique dégageant de la chaleur.

L'apport de froid peut se faire par de l'eau versée ou coulant en continu dans une double paroi, ou par la présence de glaçons, ou d'autres éléments calorifuge, disposés dans cette même double paroi.

Dans la variante de l'invention représentée sur la figure 1, le support comprend une zone plate 12 entre les pieds de support 7 de l'enceinte 2 de manière à permettre de placer la main afin de bien stabiliser l'enceinte 2 et son contenu. Le socle 10 pourra comprendre également une zone de réception 13 pour placer la boulette de pâte réalisée. Cette zone peut faire partie intégrante du socle 10 ou bien être amovible et fixable au socle 10. Cette zone de réception 13 peut également recevoir des accessoires tels que des outils de modelage, des colorants, etc. Le pétrin manuel 1 de l'invention comprend également un élément de fixation 14 apte à assurer la fixation entre les parties 8, 9 formant l'enceinte 2, par exemple dans le cas où ces parties 8, 9 ne disposent pas de moyen intrinsèque de fixation entre elles.

Par ailleurs, le pétrin 1 selon l'invention pourra comprendre un élément apte à générer des vibrations, non représenté sur les figures, lors de la rotation de la (ou des) pale(s), par exemple grâce à l'adjonction d'une lame fixe venant en contact avec une roue dentée. La roue dentée peut être montée sur la manivelle 4 par exemple au niveau de sa section de plus grande longueur et reposée à l'extérieur de l'enceinte 2 lorsque la manivelle 4 est mise en place. La lame fixe, et éventuellement amovible comme la roue dentée, est fixée sur la paroi extérieure de l'enceinte 2 ; la lame venant en contact avec la roue dentée. Bien entendu, on pourra prévoir de disposer d'une pluralité de roues ainsi que de lames. Cet ensemble est apte à générer des vibrations mécaniques qui ont comme première fonction de faciliter le mélange des ingrédients présents ou ajoutés dans l'enceinte 2. Deuxièmement, cet ensemble pourra permettre, grâce aux vibrations, de créer un bruit particulier indiquant la rotation de la (ou des) pale(s), d'une part pour la sécurité de l'utilisateur mais également pour une considération ludique.

L'invention est décrite dans ce qui précède à titre d'exemple. Il est entendu que l'homme du métier est à même de réaliser différentes variantes de l'invention sans pour autant sortir du cadre du brevet.

## Revendications

1. Pétrin manuel (1), destiné en particulier aux enfants, comportant une enceinte (2) destinée à recevoir des ingrédients, par exemple de l'eau et/ou de la farine, soit directement mis en place dans l'enceinte (2) soit introduit par une ouverture (3), **caractérisé en ce qu'**il comprend une manivelle (4) munie d'au moins une pale souple (5), ladite pale (5) étant disposée dans l'enceinte (2) et étant entraînée en rotation par une poignée (6) de la manivelle (4), extérieure à la susdite enceinte (2), la pale (5) couvrant sensiblement la totalité du volume intérieur de l'enceinte (2) lors de sa rotation.

2. Pétrin (1) selon la revendication 1, **caractérisé en ce que** la susdite enceinte (2) est montée sur un moyen de support (7).

3. Pétrin (1) selon la revendication 2, **caractérisé en ce que** le moyen de support (7) consiste en quatre pieds s'étendant sensiblement obliquement à partir dudit moyen ou de ladite enceinte (2).

4. Pétrin (1) selon l'une quelconque des revendications précédentes, **caractérisé en ce que** l'ensemble des éléments du dispositif, à savoir l'enceinte (2), son ouverture (3), la manivelle (4) et le moyen de support (7), sont démontables ; ladite enceinte (2) étant démontable en plusieurs portions (8, 9), par exemple deux parties hémisphériques.

5. Pétrin (1) selon l'une quelconque des revendications précédentes, **caractérisé en ce que** l'enceinte (2) présente une forme sphérique, ovoïdale, en forme d'olive ou de sphère aplatie.

6. Pétrin (1) selon l'une quelconque des revendications précédentes, **caractérisé en ce que** l'enceinte (2) comprend au moins une protubérance intérieure, c'est-à-dire s'étendant vers l'intérieur de ladite enceinte (2).

7. Pétrin (1) selon la revendication 2, **caractérisé en ce que** le moyen de support (7) permet de disposer l'axe de rotation de la pale (5) à la verticale, à l'horizontale, sensiblement incliné à 15° par rapport à l'horizontale ou sensiblement incliné à 45° par rapport à l'horizontale.

8. Pétrin (1) selon l'une quelconque des revendications précédentes, **caractérisé en ce qu'**il comprend deux pales (5), couvrant ensemble ou séparément sensiblement la totalité du volume intérieur de l'enceinte (2) lors de leur rotation.

9. Pétrin (1) selon l'une quelconque des revendications précédentes, **caractérisé en ce qu'**il comprend trois ou quatre pales (5), couvrant ensemble ou séparément sensiblement la totalité du volume intérieur de l'enceinte (2) lors de leur rotation.

10. Pétrin (1) selon l'une quelconque des revendications précédentes, **caractérisé en ce qu'**il comprend une, deux, trois ou quatre pale(s) (5) hélicoïdale(s).

11. Pétrin (1) selon l'une quelconque des revendications précédentes, **caractérisé en ce que** l'ouverture (3) de l'enceinte (2) comprend un moyen d'obturation.

12. Pétrin (1) selon l'une quelconque des revendications précédentes, **caractérisé en ce qu'**il comprend un dispositif d'injection amovible.

13. Pétrin (1) selon la revendication 12, **caractérisé en ce que** le dispositif d'injection dispose d'une soupape poussée par un ressort, pour injecter un liquide ou un semi-liquide dans l'enceinte (2).

14. Pétrin (1) selon la revendication 12, **caractérisé en ce que** le dispositif d'injection est situé au-dessus de l'enceinte (2).

15. Pétrin (1) selon la revendication 13, **caractérisé en ce que** le dispositif d'injection comprend une pige apte à forcer la soupape en ouverture pour larguer du liquide ou semi-liquide dans l'enceinte (2).

16. Pétrin (1) selon la revendication 14, **caractérisé en ce que** le dispositif d'injection consiste en une membrane élastomère fendue, une pige venant déformer la membrane élastomère pour autoriser son ouverture.

17. Pétrin (1) selon l'une quelconque des revendications précédentes, **caractérisé en ce que** l'enceinte (2) est transparente.

18. Pétrin (1) selon l'une quelconque des revendications précédentes, **caractérisé en ce qu'**il comprend un dispositif chauffant ou refroidissant entourant au moins partiellement la susdite enceinte (2).

19. Pétrin (1) selon la revendication 18, **caractérisé en ce que** ledit dispositif consiste en une double paroi dans laquelle un fluide chaud ou froid est transporté ou simplement repose.

20. Pétrin (1) selon la revendication 18, **caractérisé en ce que** ledit dispositif consiste en une résistance ou une ampoule électrique.

21. Pétrin (1) selon la revendication 2, **caractérisé en ce que** le moyen de support (7) comprend un socle (10) disposant notamment d'une zone de réception (13) sensiblement creuse pour recevoir la pâte finie ou tout autres éléments.

22. Pétrin (1) selon la revendication 21, **caractérisé en ce que** le socle (10) comprend une pluralité d'élément de fixation, par exemple de simples logements, pour fixer différents accessoires par exemple pour imprimer la pâte ou pour la mettre en forme.
